# EUROPEAN PATENT APPLICATION

(11) **EP 4 621 668 A1**
(43) Date of publication of application: **24.09.2025**
(21) Application number: 25163788.0
(22) Date of filing: 14.03.2025
(51) Int. Cl.: G06N 20/00

(54) **INFORMATION PROCESSING APPARATUS, INFORMATION PROCESSING METHOD, AND INFORMATION PROCESSING PROGRAM**

(30) Priority: 19.03.2024 JP 2024043754
(71) Applicant: amnimo Inc., Musashino-shi, Tokyo 180-8750 (JP)
(72) Inventor: WADA, Atsushi, Musashino-shi, Tokyo 180-8750 (JP); KOJIMA, Osamu, Musashino-shi, Tokyo 180-8750 (JP)
(74) Representative: Winter, Brandl - Partnerschaft mbB

(57) **Abstract**

A server device (10) stores therein a plurality of machine learning models and profile information that indicates an execution condition of each of the machine learning models, and extracts, when receiving a request from an operator (O), machine learning models that are executable in an execution environment that is requested by the user from among the plurality of machine learning models based on the profile information.

## Description

### FIELD

The present invention relates to an information processing apparatus, an information processing method, and an information processing program

### BACKGROUND

An Artificial Intelligence (AI) system that performs a process on an image, physical information that is acquired by a sensor, or the like by a program that is generated by machine learning, and detects something has been widely used.

Japanese Unexamined Patent Application Publication No. 2017-529633

However, at present, when programs that are generated by machine learning are to be executed in an execution environment that is prepared by a user, pieces of information, such as a type of an input signal that is needed by each of the programs, a calculation amount that is needed to perform a single detection process, a frequency of output of a detection result in the execution environment that is prepared by the user, or whether or not the detection results output by the programs coincide with information that is needed by the user, are not provided in a unified format. Therefore, for each of the programs, the user needs to perform operation of extracting a selectable program by manually checking a detailed description of each of the programs in terms of whether or not the program is operable in the execution environment that is prepared by the user and whether or not a detection result needed by the user can be output at a frequency needed by the user, which prevents realization of circulation of a machine learning program in the market.

The present invention has been conceived in view of the foregoing situations, and an object of the present invention is to simply select a machine learning program that is needed by a user by adding profile information to an AI logic.

### SUMMARY

According to an aspect of the embodiments, an information processing apparatus includes a storage unit that stores therein a plurality of machine learning models and profile information that indicates an execution condition of each of the machine learning models, and an extraction unit that, when receiving a request from a user, extracts machine learning models that are executable in an execution environment that is requested by the user from among the plurality of machine learning models based on the profile information.

According to an aspect of the embodiments, an information processing method that is implemented by a computer, the information processing method includes extracting, when receiving a request from a user, machine learning models that are executable in an execution environment that is requested by the user from among the plurality of machine learning models based on profile information that indicates an execution condition of each of the machine learning models, the profile information being stored together with the plurality of machine learning models.

According to an aspect of the embodiments, an information processing program that causes a computer to execute a process, the process includes extracting, when receiving a request from a user, machine learning models that are executable in an execution environment that is requested by the user from among the plurality of machine learning models based on profile information that indicates an execution condition of each of the machine learning models, the profile information being stored together with the plurality of machine learning models.

### BRIEF DESCRIPTION OF THE DRAWINGS

FIG. 1 is a diagram illustrating a configuration example and a process example of a monitoring system according to one embodiment;
FIG. 2 is a diagram illustrating a first specific example of an input-output signal adjustment process according to one embodiment;
FIG. 3 is a diagram illustrating a second specific example of the input-output signal adjustment process according to one embodiment;
FIG. 4 is a diagram illustrating a third specific example the input-output signal adjustment process according to one embodiment;
FIG. 5 is a block diagram illustrating a configuration example of each of apparatuses of the monitoring system according to one embodiment;
FIG. 6 is a diagram illustrating an example of an analysis model storage unit of a server apparatus according to one embodiment;
FIG. 7 is a diagram illustrating an example of a candidate information storage unit of the server apparatus according to one embodiment;
FIG. 8 is a diagram illustrating a specific example of profile information according to one embodiment;
FIG. 9 is a diagram illustrating a specific example of a display screen of an operator terminal according to one embodiment;
FIG. 10 is a diagram illustrating an example of an analysis model storage unit of an AI execution apparatus according to one embodiment;
FIG. 11 is a diagram illustrating an example of a selection result storage unit of the AI execution apparatus according to one embodiment;
FIG. 12 is a diagram illustrating an example of a monitoring data storage unit of the AI execution apparatus according to one embodiment;
FIG. 13 is a flowchart illustrating an example of the entire flow of the monitoring system according to one embodiment; and
FIG. 14 is a diagram illustrating a hardware configuration example according to one embodiment.

### DETAILED DESCRIPTION OF THE PREFERRED EMBODIMENTS

Embodiments of an information processing apparatus, an information processing method, and an information processing program according to the present invention will be described in detail below with reference to the drawings. Meanwhile, the present invention is not limited by the embodiments described below.

A configuration and a process of a monitoring system 100 according to one embodiment, a configuration and a process of each of apparatuses of the monitoring system 100, and the flow of a process performed by the monitoring system 100 will be described in sequence below, and thereafter effects of the embodiments will be described.

### 1. Configuration and process of monitoring system 100

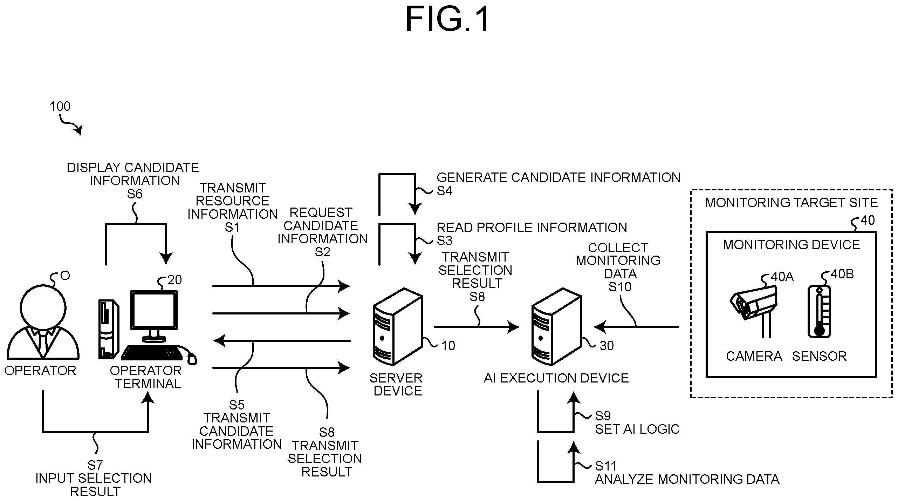

A configuration and a process of the monitoring system 100 according to one embodiment will be described in detail below with reference to FIG. 1. FIG. 1 is a diagram illustrating a configuration example and a process example of the monitoring system 100 according to one embodiment. A configuration example of the entire monitoring system 100, a process example of the monitoring system 100, and effects of the monitoring system 100 will be described below. Meanwhile, in one embodiment, detection of an agricultural harmful animal in an agricultural land will be described as one example, but the field of use is not specifically limited, and the present invention is applicable to monitoring at a park, a road, a river, or the like. Further, an analysis target to be detected is not limited to an animal, but a person, a construction machine, and a robot may be adopted.

### 1-1. Configuration example of entire monitoring system 100

The monitoring system 100 includes a server device 10, an operator terminal 20, an AI execution device 30, and a monitoring device 40. The server device 10, the operator terminal 20, and the AI execution device 30 are communicably connected to one another in a wired or wireless manner via a predetermined communication network (not illustrated). Meanwhile, various kinds of communication networks, such as the Internet or a dedicated line, may be adopted as the predetermined communication network.

### 1-1-1. Server device 10

The server device 10 is an information processing apparatus that generates candidate information that is to be provided to an operator O and receives designation of an AI logic that is selected by the operator O. For example, the server device 10 obtains pieces of profile information on AI logics from a large number of development companies that develop and own the AI logics, and stores the profile information in a storage area that is included in the server device 10. Further, the server device 10 may similarly acquire programs of the AI logics from the development companies and store the programs in the server device 10. Furthermore, the server device 10 may store therein access information that enables access in relation to the AI logics that are stored in databases (not illustrated) of the development companies that are connected by the Internet or the like. Moreover, the server device 10 is implemented by a cloud environment, an on-premises environment, an edge environment, or the like.

### 1-1-2. Operator terminal 20

The operator terminal 20 is an administrator terminal that is used by the operator O who is an administrator of a facility or an area that is a monitoring site (hereinafter, appropriately referred to as a "monitoring target site"). Meanwhile, the monitoring system 100 illustrated in FIG. 1 may include the plurality of operator terminals 20.

### 1-1-3. AI execution device 30

The AI execution device 30 is a device that, with respect to a selected AI logic, installs a program of the AI logic itself and operates the program. For example, the AI execution device 30 is implemented by a cloud environment, an on-premises environment, an edge environment, or the like.

### 1-1-4. Monitoring device 40

The monitoring device 40 is a device that is installed at the monitoring target site, that is used for monitoring, and that is implemented by a camera 40A, a sensor 40B, or the like. Here, the camera 40A is, for example, an image capturing device, such as a security camera or a monitoring camera, which is installed at the monitoring target site. Further, the sensor 40B is, for example, a measurement device, such as a thermometer, a hygrometer, a sound level meter, an intrusion detection sensor, a human sensor, or a gas detector, which is installed at the monitoring target site.

### 1-2. Example of entire process performed by monitoring system 100

An entire process performed by the monitoring system 100 as described above will be described below. Meanwhile, processes from Step S1 to Step S9 described below may be performed in different order. Further, some of the processes from Step S1 to Step S9 may be omitted.

### 1-2-1. Resource information transmission process

Firstly, the operator O operates the operator terminal 20 and designates resource information on an execution environment that is used as a condition for selection of a candidate, with respect to the server device 10 (Step S1). Here, the resource information on the execution environment includes a maximum performance value of an input device that is connected in the execution environment, a size of a memory area in which a program of an AI logic is stored, and computing power of a processing apparatus that executes the AI logic. Further, the resource information on the execution environment coincides with a detail of a resource that is included in the AI execution device 30.

### 1-2-2. Candidate information request process

Secondly, the operator O operates the operator terminal 20 and gives a request for candidate information to the server device 10 (Step S2). For example, the operator terminal 20 gives, to the server device 10, a request for candidate information that indicates candidate AI logics that are executable in the execution environment in which an AI logic is to be set, via the operation that is performed by the operator O. Further, the operator O may designate an analysis category (for example, object detection or face authentication) that indicates a classification of an analysis target of the AI logic, an output value of a needed detection result, or a frequency of output of the detection result.

Here, the AI logic is an analysis method that is implemented by an analysis model AM that is a trained machine learning model that outputs an analysis target.

### 1-2-3. Profile information read process

Thirdly, the server device 10 reads a plurality of pieces of profile information that are stored in a storage area of the server device 10 (Step S3). For example, the server device 10 reads profile information that is added to model data of the stored AI logic.

Here, the profile information indicates an execution condition for the AI logic, and is, for example, text information that defines a detection target, an input signal, a calculation amount that is needed to perform single detection, a memory amount that is needed to store a program, a meaning of a detection result to be output, a format of an output signal, a use condition including a usage fee, or the like with respect to the AI logic.

### 1-2-4. Candidate information generation process

Fourthly, the server device 10 generates candidate information (Step S4). For example, the server device 10 extracts an AI logic that is executable in the execution environment that is requested by the operator O, and generates candidate information that includes identification information on the extracted AI logic. At this time, the server device 10 extracts an AI logic that is executable in the execution environment and that is able to output a detection result needed by the user at a needed frequency, based on the read profile information and the resource information that is received from the operator terminal 20 or the like.

### 1-2-5. Candidate information transmission process

Fifthly, the server device 10 transmits the candidate information to the operator terminal 20 (Step S5). For example, the server device 10 transmits the candidate information that includes the identification information on the AI logic that is executable in the requested execution environment to the operator terminal 20.

### 1-2-6. Candidate information display process

Sixthly, the operator terminal 20 displays the candidate information (Step S6). For example, the operator terminal 20 displays, as the candidate information, an AI logic selection screen that presents a list of pieces of identification information on AI logics on a monitor. At this time, the operator terminal 20 may additionally display performance information, which indicates performance that is expected to be achieved by each of the AI logics when the AI logic is executed under a condition that is indicated by the resource information, or a use condition that includes a usage fee of each of the AI logics, based on information that is provided by the server device 10.

### 1-2-7. Selection result input process

Seventhly, the operator O inputs a selection result to the operator terminal 20 (Step S7). For example, the operator O performs determination based on the performance information on each of the AI logics or the use condition including the usage fee, which is displayed on the AI logic selection screen, selects the identification information on an AI logic that is determined as optimal, and inputs a selection result of the AI logic that is to be used for analysis. Meanwhile, in the selection of the AI logic, the operator terminal 20 may automatically perform the selection by designating, in advance, a selection condition that is related to the performance information or the use condition including the usage fee.

Here, at the time of the selection of the AI logic, the operator O may select a combination of a plurality of AI logics based on the assumption that the plurality of AI logics that have different characteristics are to be used.

For example, in the monitoring system 100, when two AI logics are used in combination, an analysis based on an "AI logic A" is first performed on a single piece of input information in the AI execution device 30. At this time, in the monitoring system 100, an "AI logic B" is able to use, as an analysis target, output information that is a detection result of the "AI logic A", in addition to the input information. Further, in the monitoring system 100, by outputting a detection result of the "AI logic B", a single detection result is output as a system. In the monitoring system 100, the same applies to a case in which three or more AI logics are combined, where the plurality of AI logics are executed in sequence and an AI logic that is executed at a certain time is able to use, as input, output results of the AI logics that are executed before the certain time, in addition to the input information that is acquired by the system.

When the profile information read process at Step S3 as described above is performed on a plurality of AI logics, the server device 10 reads each of a detection target, an input signal, a calculation amount that is needed to perform single detection, a memory amount that is needed to store a program, a meaning of a detection result to be output, a format of an output signal, a use condition including a usage fee, and the like with respect to the plurality of AI logics.

When the candidate information generation process at Step S4 as described above is performed on a plurality of AI logics, it is needed that all of the AI logics can be individually executable under the condition that is indicated by the resource information, and it is needed that a resource that is defined by the condition that is indicated by the resource information does not become insufficient even when all of the AI logics are installed. Furthermore, when the processes are executed with calculation performance that is designated as being able to be prepared by the system, and even if a total execution time taken to sequentially perform the processes of all of the AI logics is long, the execution time needs to be shorter than a time that enables output at the frequency that is needed by a user. The server device 10 outputs, as the candidate information, a combination of AI logics that meet the conditions as described above.

When the candidate information transmission process at Step S5 as described above is performed on a plurality of AI logics, the server device 10 outputs, as the candidate information, a combination of AI logics that are determined as meeting the condition, and transmits the candidate information to the operator terminal 20.

When the candidate information display process at Step S6 as described above is performed on a plurality of AI logics, the operator terminal 20 may display performance information that is realized in total by each of the combinations or the use condition including a usage fee.

When the selection result input process at Step S7 as described above is performed on a plurality of AI logics, the operator O inputs a selection result that is selected from the candidate information that is presented as a combination of AI logics on the operator terminal 20. At this time, the operator O needs to designate an order of execution of each of the AI logics, and an AI logic that is executed at a certain time is able to designate, as input information, values that are designated as output results of AI logics that are executed before the certain time.

### 1-2-8. Selection result transmission process

Eighthly, the operator terminal 20 transmits the selection result that is the identification information on the selected AI logic to the AI execution device 30, and instructs the AI execution device 30 to install the selected AI logic (Step S8). For example, the operator terminal 20 transmits, as the selection result, the identification information on the AI logic, which is input to the operator terminal 20 by the operator O, to the AI execution device 30 via the server device 10.

### 1-2-9. AI logic setting process

Ninthly, the AI execution device 30 installs the AI logic (Step S9). For example, the AI execution device 30 installs an application of the AI logic on a resource that is included in the AI execution device 30.

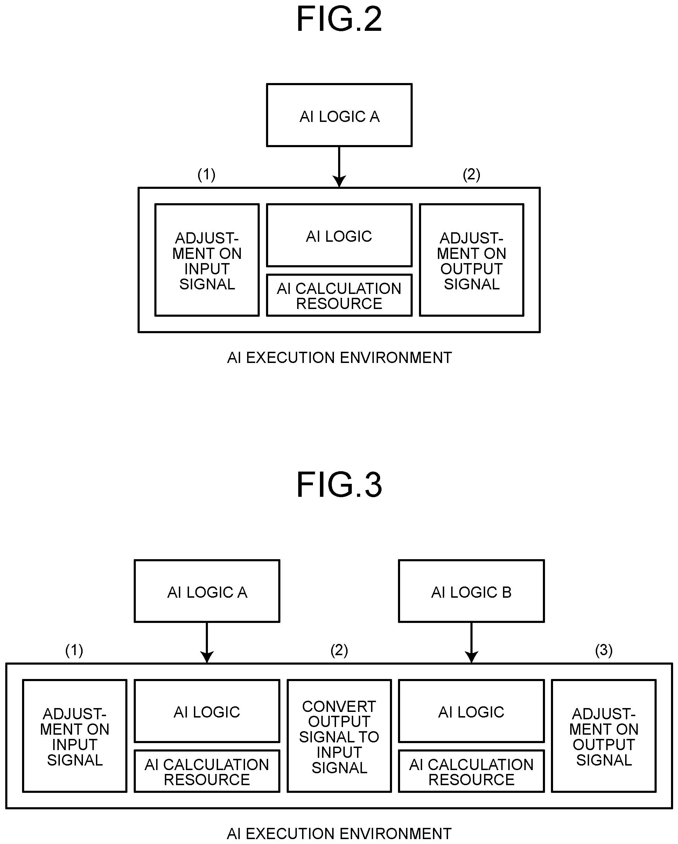

At this time, the AI execution device 30 is able to refer to the profile information on the AI logic to be installed and perform an input-output signal adjustment process for adjusting an input signal and an output signal. A first specific example to a third specific example of the input-output signal adjustment process will be described below with reference to FIG. 2 to FIG. 4.

### First specific example

The first specific example will be described below with reference to FIG. 2, in which an input signal and an output signal are adjusted such that a single AI logic can be executed. FIG. 2 is a diagram illustrating the first specific example of the input-output signal adjustment process according to one embodiment. As illustrated in FIG. 2(1), the AI execution device 30 performs adjustment such that monitoring data (for example, image data or measurement data) that is collected from the monitoring device 40 is converted to a certain format that is inputtable to the "AI logic A" based on the definition of the input signal that is indicated by the profile information. Furthermore, as illustrated in FIG. 2(2), the AI execution device 30 performs adjustment such that an output signal that is output from the "AI logic A" is converted to a certain format that is designated by the operator O based on the definition of the output signal that is indicated by the profile information.

### Second specific example

The second specific example will be described below with reference to FIG. 3, in which an input signal and an output signal are adjusted such that two or more AI logics can be connected in series and can be executed. FIG. 3 is a diagram illustrating the second specific example of the input-output signal adjustment process according to one embodiment. In the example illustrated in FIG. 3, a process will be described in which two AI logics of the "AI logic A" and the "AI logic B" are serially connected in this order and executed. As illustrated in FIG. 3(1), the AI execution device 30 performs adjustment such that the monitoring data that is collected from the monitoring device 40 is converted to a certain format that is inputtable to the "AI logic A". Furthermore, as illustrated in FIG. 3(2), the AI execution device 30 performs adjustment such that an output signal that is output from the "AI logic A" is converted to a certain format that is inputtable to the "AI logic B". Furthermore, as illustrated in FIG. 3(3), the AI execution device 30 performs adjustment such that an output signal that is output from the "AI logic B" is converted to a certain format that is designated by the operator O.

### Third specific example

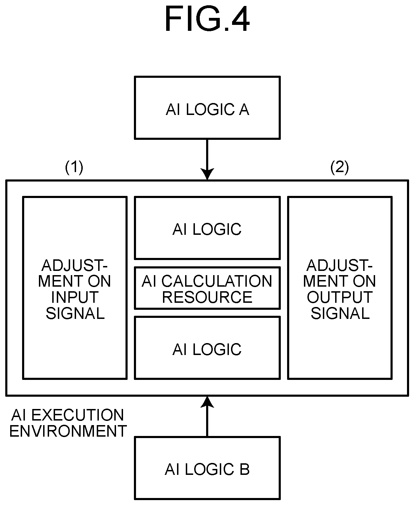

The third specific example will be described below with reference to FIG. 4, in which an input signal and an output signal are adjusted such that two or more AI logics can be connected in parallel and can be executed. FIG. 4 is a diagram illustrating the third specific example of the input-output signal adjustment process according to one embodiment. In the example illustrated in FIG. 4, a process will be described in which two AI logics of the "AI logic A" and the "AI logic B" are connected in parallel and executed. As illustrated in FIG. 4(1), the AI execution device 30 performs adjustment such that monitoring data that is collected from the monitoring device 40 is converted to a certain format that is inputtable to both of the "AI logic A" and the "AI logic B". Furthermore, as illustrated in FIG. 4(2), the AI execution device 30 performs adjustment such that output signals that are output from the "AI logic A" and the "AI logic B" are converted to a certain format that is designated by the operator O.

### 1-2-10. Monitoring data collection process

Tenthly, the AI execution device 30 collects monitoring data from the monitoring device 40 (Step S10). For example, the AI execution device 30 collects image data of a still image that is captured every second from the camera 40A that is installed at the monitoring target site. Furthermore, the AI execution device 30 collects measurement data of temperature that is measured every second from the sensor 40B that is installed at the monitoring target site the sensor 40B.

At this time, the AI execution device 30 stores the collected monitoring data together with an image capturing time and a measurement time. Meanwhile, the image data may be image data of a moving image or data including voice data. Furthermore, the measurement data may be data of humidity, noise, an intrusion detection signal, a human signal, a gas detection signal, or the like.

### 1-2-11. Monitoring data analysis process

Eleventhly, the AI execution device 30 analyzes the monitoring data (Step S11). For example, the AI execution device 30 refers to the selection result and analyzes the monitoring data by using the AI logic that is selected by the operator O. At this time, the AI execution device 30 inputs the monitoring data to the analysis model AM that corresponds to each of the AI logics, and detects an event that corresponds to an output analysis target.

### 1-3. Effects of monitoring system 100

In the following, a problem with a monitoring system 100P according to a reference technology will be first described, and thereafter, an effect of the monitoring system 100 will be described.

### 1-3-1. Problem with monitoring system 100P

The monitoring system 100P according to the reference technology is a technology for provisioning of a service or a resource in a cloud service to succeed in executing an application, and includes detection of a request for execution of the application in the cloud service, response to the detected request, and reading of a descriptor record of the application from a descriptor file, where the descriptor record is unique to the cloud service and an environmental resource or a detail of the service that is needed for the execution of the application is provided. Furthermore, the monitoring system 100P translates requirements for the resource and the service to actions that need to be taken in the cloud service for provisioning of the resource or the service that is needed for the application, where the translated actions are mediated so as to occur in a predetermined sequence based on the detail that is provided by the descriptor record of the application, statuses of the translated actions are provided, and whether or not the provisioning of the resource or the service that is needed to succeed in executing the application in the cloud service is performed is determined by using the statuses.

However, it is difficult for the monitoring system 100P to automatically perform selection of an AI logic, setting on an apparatus, or the like. For example, in the monitoring system 100P, information, such as an input value of image data, measurement data, or the like that is used as an analysis target, an output value that is output from the AI logic, a calculation resource that is needed for execution of the AI logic, or a time taken to obtain the output value, is not obtainable from the AI logic itself. Therefore, when installing the AI logic, the operator O needs to separately obtain the information as described above, adjust the execution environment, and then execute the AI logic. Further, when selecting an AI logic in the monitoring system 100P, it is needed to check whether or not an input value that is needed by the AI logic can be prepared such that the input value is usable in the execution environment, whether or not an adequate calculation resource can be ensured (a degree of a calculation resource to be prepared for a subject AI logic when a plurality of AI logics are to be executed), or whether or not an output value includes an analysis result that is needed by the operator O. Therefore, the operator O needs to separately obtain the information as described above and then select an AI logic.

Furthermore, when installing an AI logic in an environment that the monitoring system 100P has prepared, the monitoring system 100P needs to deal with each of operation, such as conversion of an input signal from a camera or a sensor that is prepared in the execution environment to a signal that is needed by the AI logic, allocation of a calculation resource with which the AI logic is able to output a detection result at an adequate frequency, or conversion of an output value in the form of a code that is unique to an individual program to a code system that is needed by a subject company, by custom modification of a program that controls activation of the AI logic, which increases a cost of use of the AI logic.

Moreover, in the monitoring system 100P, even when an output value of a single AI logic is used as an input value of a different AI logic, a customized development to connect the two AI logics is needed because both of the output value and the input value are designed with unique specifications.

### 1-3-2. Overview of monitoring system 100

The monitoring system 100 performs processes as described below. Firstly, the operator O designates resource information on an execution environment for the server device 10 via the operator terminal 20. Secondly, the operator terminal 20 gives, to the server device 10, a request for candidate information that indicates candidate executable AI logics via operation performed by the operator O, and designates an execution environment in which an AI logic is to be set. Thirdly, the server device 10 reads profile information that is added to model data of the stored AI logic. Fourthly, the server device 10 extracts an AI logic that is requested by the operator O, that is executable in the designated execution environment, and that is able to output a detection result that is needed by the operator O at a certain frequency that is needed by the operator O, and generates candidate information that includes identification information on the extracted AI logic. Fifthly, the server device 10 transmits the candidate information that includes the identification information on the executable AI logics to the operator terminal 20. Sixthly, the operator terminal 20 displays, as the candidate information, a setting screen for presenting a list of the identification information on the AI logics on a monitor. Seventhly, the operator O inputs, to the operator terminal 20, a selection of an AI logic that is to be used for analysis. Eighthly, the operator terminal 20 transmits the selection of the AI logic as a selection result to the AI execution device 30. Ninthly, the AI execution device 30 installs an application of the AI logic in the designated execution environment, and adjusts an input signal and an output signal by using the profile information. Tenthly, the AI execution device 30 collects monitoring data from the monitoring device 40. Eleventhly, the AI execution device 30 analyzes the monitoring data by using the installed AI logic and detects an event.

As described above, the monitoring system 100 stores a plurality of machine learning models and profile information that indicates an execution condition for each of the machine learning models, and, upon receiving a request from a user, extracts, from among plurality of machine learning models, a machine learning model that is executable in an execution environment that is prepared by the user and that is able to output a detection result needed by the user at a certain frequency needed by the user, based on the profile information. Furthermore, when installing the machine learning model that is selected by the user in the execution environment that is prepared by the user, the monitoring system 100 automatically performs setting for converting an input signal in the execution environment to a signal format that is needed by the selected machine learning model, setting for ensuring, in the execution environment, a calculation resource that is needed to output the detection result at the certain frequency needed by the user, and setting for converting an output value of the machine learning model to a format that is needed by the user, based on the profile information that indicates the execution condition for the machine learning model.

### 1-3-3. Effects of monitoring system 100

The monitoring system 100 achieves effects as described below. Firstly, when selecting an AI logic that is to be executed in an AI execution environment that is requested by the operator O, the monitoring system 100 is able to extract an AI logic that is executable and that is able to output an output value needed by the operator O at a certain frequency needed by the operator O, so that it is possible to automatically extract a candidate selectable AI logic. Secondly, when installing the AI logic that is selected by the operator O, the monitoring system 100 is able to automatically perform setting including setting of a format, a cycle, or the like of an input signal to a certain format, a certain cycle, or the like that can be processed by the AI logic, setting of an execution timing of an AI process by recognizing the cycle of the input signal and a time interval from input to output, and conversion of an output value to a certain value needed for a subsequent process and output of the value. Thirdly, it is possible to combine a plurality of AI logics and implement a combination of applications such that an output value of a single AI logic is used as an input value of a next AI logic or such that a collected input value is processed by the output value of the AI logic and used as an input value of a next AI logic.

As described above, the monitoring system 100 is able to realize a state in which an AI logic that is needed by the operator O is easily selected from among a large number of AI logics and the AI logic is automatically installed and executed. Specifically, the monitoring system 100 is able to easily select a machine learning model that is needed by a user by adding the profile information to the AI logic, and simplify installation of the selected program. Furthermore, the monitoring system 100 is able to easily search for an AI logic, which is able to operate in an execution environment of a machine learning model that is prepared by the user and which is able to output a detection result needed by the user at a certain frequency needed by the user, so that it is possible to automatically perform setting of the execution environment at the time of installation of the selected AI logic.

### 2. Configuration and process of each of apparatuses in monitoring system 100

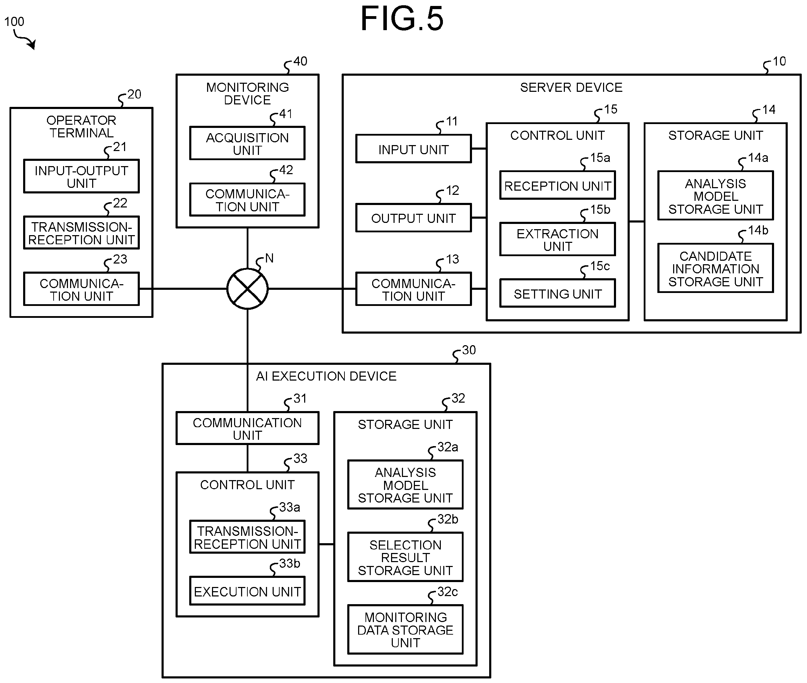

A configuration and a process of each of the apparatuses that are included in the monitoring system 100 illustrated in FIG. 1 will be described below with reference to FIG. 5. FIG. 5 is a block diagram illustrating a configuration example of each of the apparatuses of the monitoring system 100 according to one embodiment. In the following, a configuration example of the entire monitoring system 100 according to one embodiment will be first described, and thereafter, a configuration example and a process example of the server device 10, a configuration example and a process example of the operator terminal 20, and a configuration example and a process example of the AI execution device 30 will be described in detail.

### 2-1. Configuration example of entire monitoring system 100

A configuration example of the entire monitoring system 100 illustrated in FIG. 1 will be described with reference to FIG. 5. As illustrated in FIG. 5, the monitoring system 100 includes the server device 10, the operator terminal 20, the AI execution device 30, and the monitoring device 40. Furthermore, the server device 10, the operator terminal 20, the AI execution device 30, and the monitoring device 40 are communicably connected to one another via a communication network N that is implemented by the Internet, a dedicated line, or the like.

The server device 10 is installed in a cloud environment, an on-premises environment, an edge environment, or the like. Further, the operator terminal 20 is installed in a monitoring room or the like in an institution or a facility that is managed by the operator O. Furthermore, the AI execution device 30 is installed in a cloud environment, an on-premises environment, an edge environment, or the like. Moreover, the monitoring device 40 is installed in a monitoring target site that is a monitoring site.

### 2-2. Configuration example and process example of server device 10

A configuration example and a process example of the server device 10 will be described with reference to FIG. 5. The server device 10 is an information processing apparatus and includes an input unit 11, an output unit 12, a communication unit 13, a storage unit 14, and a control unit 15.

### 2-2-1. Input unit 11

The input unit 11 controls input of various kinds of information to the server device 10. For example, the input unit 11 is implemented by a mouse, a keyboard, or the like and receives input of various kinds of information to the server device 10.

### 2-2-2. Output unit 12

The output unit 12 controls output of various kinds of information from the server device 10. For example, the output unit 12 is implemented by a display or the like and displays various kinds of information that are stored in the server device 10.

### 2-2-3. Communication unit 13

The communication unit 13 controls data communication with a different apparatus. For example, the communication unit 13 performs data communication with each of communications apparatuses via a router or the like. Further, the communication unit 13 is able to perform data communication with a terminal (not illustrated).

### 2-2-4. Storage unit 14

The storage unit 14 stores therein various kinds of information that are referred to when the control unit 15 operates, or various kinds of information that are acquired when the control unit 15 operates. The storage unit 14 stores therein a plurality of machine learning models and profile information that indicates an execution condition of each of the machine learning models, and includes an analysis model storage unit 14a and a candidate information storage unit 14b. Here, the storage unit 14 may be implemented by, for example, a semiconductor memory device, such as a Random Access Memory (RAM) or a flash memory, or a storage device, such as a hard disk or an optical disk. Meanwhile, in the example illustrated in FIG. 5, the storage unit 14 is arranged inside the server device 10, but may be arranged outside the server device 10, or it may be possible to arrange a plurality of storage units.

### 2-2-4-1. Analysis model storage unit 14a

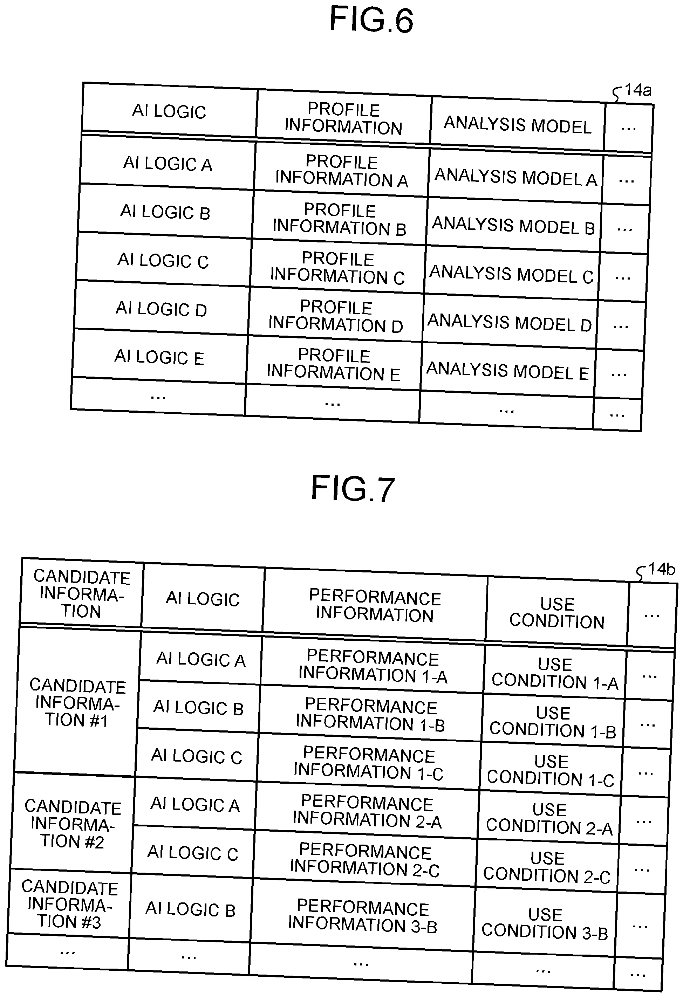

The analysis model storage unit 14a stores therein the analysis model AM. For example, the analysis model storage unit 14a stores therein the analysis model AM that is a machine learning model that is received by a reception unit 15a of the control unit 15 (to be described later) and that is set by a setting unit 15c. Here, an example of data that is stored in the analysis model storage unit 14a will be described with reference to FIG. 6. FIG. 6 is a diagram illustrating an example of the analysis model storage unit 14a of the server device 10 according to one embodiment. In the example illustrated in FIG. 6, the analysis model storage unit 14a includes items such as an "AI logic", "profile information", and an "analysis model".

The "AI logic" indicates identification information for identifying an AI logic that is settable by the server device 10, and is, for example, an identification number or an identification symbol of the AI logic. The "profile information" indicates an execution condition for the AI logic, and is, for example, text information that defines an output target, an input signal, a calculation amount, a memory, an execution file, an output signal, or the like with respect to the AI logic. The "analysis model" is model data of a machine learning model, and is, for example, data that includes execution data for executing an algorithm of the analysis model AM for image analysis of detecting an event from image data or sensor analysis of detecting an event from measurement data, a model parameter that is a setting value, a hyper-parameter, or the like.

FIG. 6 illustrates an example in which the analysis model storage unit 14a stores therein a plurality of trained machine learning models, such as {profile information: "profile information A", analysis model: "analysis model A"} for an AI logic that is identified by an "AI logic A", {profile information: "profile information B", analysis model: "analysis model B"} for an AI logic that is identified by an "AI logic B", {profile information: "profile information C", analysis model: "analysis model C"} for an AI logic that is identified by an "AI logic C", {profile information: "profile information D", analysis model: "analysis model D"} for an AI logic that is identified by an "AI logic D", and {profile information: "profile information E", analysis model: "analysis model E"} for an AI logic that is identified by an "AI logic E".

### 2-2-4-2. Candidate information storage unit 14b

The candidate information storage unit 14b stores therein candidate information. For example, the candidate information storage unit 14b stores therein candidate information that includes identification information on an AI logic that is extracted by an extraction unit 15b of the control unit 15 (to be described later). Here, an example of data that is stored in the candidate information storage unit 14b will be described with reference to FIG. 7. FIG. 7 is a diagram illustrating an example of the candidate information storage unit 14b of the server device 10 according to one embodiment. In the example illustrated in FIG. 7, the candidate information storage unit 14b includes items such as "candidate information", an "AI logic", "performance information", and a "use condition".

The "candidate information" is identification information for identifying a candidate AI logic that is extracted by the extraction unit 15b of the control unit 15 (to be described later) and that is executable in a designated execution environment, and is, for example, an identification number or an identification symbol of the candidate AI logic or a group of candidate AI logics. The "AI logic" indicates identification information for identifying an AI logic that is designated by the operator O who is a user, and is, for example, an identification number or an identification symbol on the AI logic. The "performance information" indicates information on performance that is expected to be achieved when the AI logic that is identified by the "AI logic" is executed in the execution environment, and is, for example, information on a processing time or a maximum value of an output frequency. The "use condition" indicates a condition of use of the AI logic that is identified by the "AI logic", and is, for example, information on a usage fee, restriction on use, or an available period.

Specifically, FIG. 7 illustrates an example in which the candidate information storage unit 14b stores therein data or the like, where a candidate that is identified by "candidate information #1" is associated with AI logics of {AI logic: "AI logic A", "AI logic B", "AI logic C"}, performance information of {performance information: "performance information 1-A", "performance information 1-B", "performance information 1-C"}, and use conditions of {use condition: "use condition 1-A", "use condition 1-B", "use condition 1-C"}, a candidate that is identified by "candidate information #2" is associated with AI logics of {AI logic: "AI logic 2-A", "AI logic 2-C"}, performance information of {performance information: "performance information A", "performance information C"}, use conditions of {use condition: "use condition A", "use condition C"}, and a candidate that is identified by "candidate information #3" is associated with an AI logic of {AI logic: "AI logic B"}, performance information of {performance information: "performance information 3-B"}, and a use condition of {use condition: "use condition 3-B"}.

### 2-2-5. Control unit 15

The control unit 15 controls the entire server device 10. The control unit 15 includes the reception unit 15a, the extraction unit 15b, and the setting unit 15c. Here, the control unit 15 may be implemented by, for example, an electronic circuit, such as a Central Processing Unit (CPU) or a Micro Processing Unit (MPU), or an integrated circuit, such as an Application Specific Integrated Circuit (ASIC) or a Field Programmable Gate Array (FPGA).

### 2-2-5-1. Reception unit 15a

The reception unit 15a receives various kinds of information. Meanwhile, the reception unit 15a may store the various kinds of received information in the storage unit 14. In the following, an AI logic reception process, a candidate information request reception process, and an AI logic selection reception process will be described.

### AI logic reception process

The reception unit 15a performs the AI logic reception process. For example, the reception unit 15a receives data that is model data of a machine learning model and that includes execution data for executing an algorithm of the analysis model AM for image analysis for detecting an event from image data or sensor analysis for detecting an event from measurement data, a model parameter that is a setting value, a hyper-parameter, or the like. At this time, the reception unit 15a receives, from a predetermined database, the model data of the analysis model AM to which profile information is added and stores the model data in the storage unit 14.

A specific example of the AI logic reception process will be described below. The reception unit 15a receives, as the analysis model AM for image analysis that enables object detection, {AI logic: "AI logic A", profile information: "profile information A", analysis model: "analysis model A"}, {AI logic: "AI logic B", profile information: "profile information B", analysis model: "analysis model B"}, {AI logic: "AI logic C", profile information: "profile information C", analysis model: "analysis model C"}, {AI logic: "AI logic D", profile information: "profile information D", analysis model: "analysis model D"}, and {AI logic: "AI logic E", profile information: "profile information E", analysis model: "analysis model E"} from the predetermined database, and stores the analysis model in the analysis model storage unit 14a.

### Resource information reception process

The reception unit 15a performs a resource information reception process. For example, the reception unit 15a receives resource information on an execution environment that is used as a condition for selection of a candidate AI logic, where the resource information is transmitted by the operator terminal 20. At this time, the reception unit 15a receives, as the resource information, a maximum performance value of an input device that is connected in the execution environment, a size of a memory area in which a program of an AI logic is stored, computing power of a processing apparatus that executes the AI logic, or the like.

A specific example of the resource information reception process will be described below. The reception unit 15a receives "resource information #1" as the resource information that is input by the operator O by operation on the operator terminal 20.

### Candidate information request reception process

The reception unit 15a performs a candidate information request reception process. For example, the reception unit 15a receives a request for candidate information that indicates a candidate AI logic, where the request is transmitted by the operator terminal 20. At this time, the reception unit 15a may receive an analysis category that indicates a classification of an analysis target of the AI logic, output information that indicates an output value of a needed detection result, an output frequency that is a frequency of output of the detection result, or the like.

A specific example of the candidate information request reception process will be described below. The reception unit 15a receives, as a candidate information transmission request that is input by the operator O by operation on the operator terminal 20, {transmission request: "transmission request #1", analysis category: "analysis category #2", output information: "output information #1", output frequency: "output frequency #1"}.

### AI logic selection reception process

The reception unit 15a performs an AI logic selection reception process. For example, the reception unit 15a receives a selection of an AI logic, and receives, as a selection result, the selection of the analysis model AM from among the plurality of analysis models AM that are used for the AI logic. At this time, the reception unit 15a receives, as the selection result, a selection that is made by the operator O from among the plurality of analysis models AM that are extracted by the extraction unit 15b.

A specific example of the AI logic selection reception process will be described below. The reception unit 15a receives, as the selection result, a selection of use of a single AI logic of {AI logic: "AI logic A"} that is input by the operator O by operation on the AI logic selection screen that is displayed on the monitor of the operator terminal 20, and transmits the selection result to the AI execution device 30. Further, the reception unit 15a receives, as the selection result, a selection of serial use of two AI logics of {AI logic 1: "AI logic A", AI logic 2: "AI logic B"} that is input by the operator O by operation on the AI logic selection screen that is displayed on the monitor of the operator terminal 20, and transmits the selection result to the AI execution device 30. Furthermore, the reception unit 15a receives, as the selection result, a selection of parallel use of two AI logics of {AI logic 1-1: "AI logic A", AI logic 1-2: "AI logic B"} that is input by the operator O by operation on the AI logic selection screen that is displayed on the monitor of the operator terminal 20, and transmits the selection result to the AI execution device 30.

### 2-2-5-2. Extraction unit 15b

The extraction unit 15b extracts various kinds of information. Meanwhile, the extraction unit 15b may store the various kinds of extracted information in the storage unit 14. In the following, a profile information read process, a candidate information generation process, and a candidate information transmission process will be described.

### Profile information read process

The extraction unit 15b extracts a profile information read process. For example, the extraction unit 15b refers to the profile information that defines an output target, an input signal, a calculation amount, a memory, an execution file, an output signal, or the like of the AI logic and that is stored in the analysis model storage unit 14a of the storage unit 14.

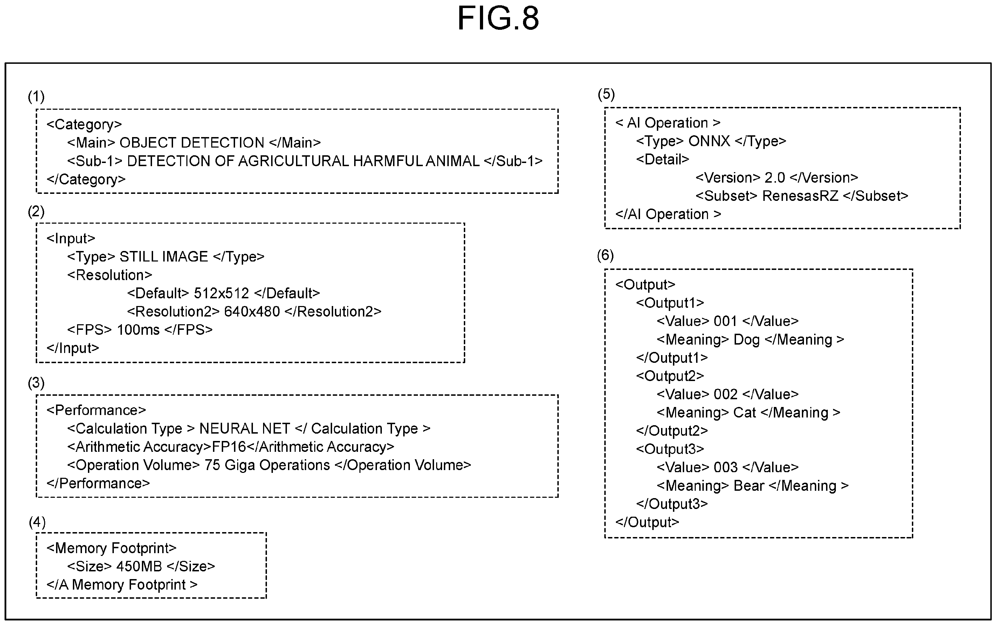

A specific example of the profile information will be described below with reference to FIG. 8. FIG. 8 is a diagram illustrating the specific example of the profile information according to one embodiment. In the following, explanation will be given of a first specific example illustrating the profile information that defines the output target of the AI logic, a second specific example illustrating the profile information that defines the input signal of the AI logic, a third specific example illustrating the profile information that defines the calculation amount of the AI logic, a fourth specific example illustrating the profile information that defines the memory of the AI logic, a fifth specific example illustrating the profile information that defines the execution file of the AI logic, and a sixth specific example illustrating the profile information that defines the output signal of the AI logic. Meanwhile, the profile information is structured text information based on JavaScript (registered trademark) Object Notation (JSON), Extensible Markup Language (XML), YAML Ain't Markup Language (YAML), or the like, but a format and a type are not specifically limited.

### First specific example: output target

As illustrated in FIG. 8(1), the profile information defines the output target of the AI logic. FIG. 8(1) illustrates an example in which a "Category" that indicates a classification of the output target of the AI logic includes "Main", which indicates a main classification and in which "object detection" that enables object detection is defined, and "Sub-1", which indicates a sub classification and in which "detection of agricultural harmful animal" that enables detection of an agricultural harmful animal is defined. Specifically, as for the output target of the AI logic, a general target of each analysis field is defined by "Main", and a specific target is defined by "Sub" with respect to an AI logic that is trained to strengthen an analysis ability with respect to the specific target, but definition of the output target is not specifically limited.

Here, the profile information that defines the output target of the AI logic may be set to, as image analysis for analyzing image data, "person detection", "animal detection", "behavior detection", "face authentication", "individual identification by way of walk ", "gender and age estimation", "detection of clothes and accessories", "detection of care-needed person", "robot detection", "detection of work vehicle", or the like in addition to the "object detection" or the "detection of agricultural harmful animal". Further, the profile information that defines the output target of the AI logic may be set to, as sensor analysis for analyzing measurement data, "abnormal temperature", "abnormal humidity", "abnormal noise", "abnormal intrusion detection", "abnormal person detection", "abnormal gas detection", or the like.

### Second specific example: input signal

As illustrated in FIG. 8(2), the profile information defines the input signal of the AI logic. FIG. 8(2) illustrates an example in which "Input" that indicates input that is needed by the AI logic includes a "Type", which indicates an input classification of image data and in which a "still image" is defined, "Resolution", which indicates the number of pixels as data granularity of the image data and includes "Default" that indicates initial setting and that is set to "512 ^{×} 512" and "Resolution 2" that indicates available different setting to be handled and that is set to "640 ^{×} 480", and an "FPS", which indicates a frequency of capturing image data and which is set to "100 ms" as Frames Per Second (FPS).

Here, the profile information that defines the input signal of the AI logic may be set to a "moving image" that indicates moving image data, a frequency of capturing moving image (for example, FPS), or the like, in addition to the "still image" that is image data. Further, the profile information that defines the input signal may be set to "temperature", "humidity", "noise", an "intrusion detection signal", a "human signal", or a "gas detection signal", which is the measurement data, or a frequency of capturing each data.

### Third specific example: calculation amount

As illustrated in FIG. 8(3), the profile information defines a specification of a calculation apparatus that is needed to execute the AI logic and a calculation amount that is needed to perform single detection. FIG. 8(3) illustrates an example in which "Performance" that indicates the calculation amount of the AI logic includes "Calculation Type", which indicates a calculation type of the AI logic and in which "neural net" is defined, "Arithmetic Accuracy", which indicates arithmetic accuracy of the AI logic and in which "FP16" is defined, and "Operation Volume", which indicates a calculation amount for performing single detection by the AI logic and in which "75 Giga Operations" is defined.

Here, the calculation amount of the AI logic indicates the calculation amount for performing single output by the AI logic, and, when it is assumed that a calculation resource with certain performance is available, a time taken by the calculation resource to execute the calculation amount indicates a time taken from input to output of an analysis result by using the AI logic. A value that is calculated by using the above-described value and that indicates the number of times of output that are performed per unit time is the output frequency.

Furthermore, the profile information that defines the computing power of the AI logic may be set to "FP32", "FP26", "INT8", or the like, rather than "FP16", as the arithmetic accuracy.

### Fourth specific example: memory

As illustrated in FIG. 8(4), the profile information defines the memory of the AI logic. FIG. 8(4) illustrates an example in which "Memory Footprint" that indicates memory footprint that is needed by the AI logic and includes a "Size", which indicates a capacity of the memory footprint and in which "450 MB" is defined.

Here, the profile information that defines the memory of the AI logic is defined separately from the calculation amount of the AI logic, which is described in the fourth specific example, and is used to, for example, take into account a shared resource when a plurality of AI logics are simultaneously executed.

### Fifth specific example: execution file

As illustrated in FIG. 8(5), the profile information defines the execution file of the AI logic. FIG. 8(5) illustrates an example in which "AI Operation" that indicates AI operation used by the AI logic includes a "Type", which indicates a classification of a description form of the AI operation and in which "ONNX (Open Neural Network Exchange)" is defined, and a "Detail", which indicates a detail of the AI operation and includes a "Version" that indicates a version and that is set to "2.0" and a "Subset" that indicates a subset and that is set to "RenesasRZ".

Here, the profile information that defines the execution file of the AI logic may be set to "TensorFlow", a unique classification, or the like, rather than "ONNX", as a classification of the description form of the AI operation. Further, the profile information that defines the execution file of the AI logic may define an arbitrary name as the subset of the AI operation.

### Sixth specific example: output signal

As illustrated in FIG. 8(6), the profile information defines the output signal of the AI logic. FIG. 8(6) illustrates an example in which "Output" that indicates an output signal that can be output by the AI logic includes "Output 1", which indicates a first output signal and includes a "Value" that indicates an output value and that is set to "001" and "Meaning" that indicates a meaning corresponding to the output value and that is set to a "Dog", "Output 2", which indicates a second output signal and includes a "Value" that indicates an output value and that is set to "002" and "Meaning" that indicates a meaning corresponding to the output value and that is set to a "Cat", and "Output 3", which indicates a third output signal and includes a "Value" that indicates an output value and that is set to "003" and "Meaning" that indicates a meaning corresponding to the output value and that is set to a "Bear". Specifically, the output target of the AI logic is defined in a certain format in which the "Meaning" that indicates a meaning corresponding to the output value is assigned to the "Value" that indicates the output value represented by a unique label, but the format for defining the output target is not specifically limited.

Here, the profile information that defines the output signal of the AI logic is written in English, as the meaning, such as a "Dog", a "Cat", or a "Bear", that corresponds to the output value, but may be written in a different language.

### Candidate information generation process

The extraction unit 15b performs the candidate information generation process. The extraction unit 15b, upon receiving a request from the operator O, extracts the analysis model AM that is executable in the execution environment that is requested by the operator O from among the plurality of analysis models AM, based on the profile information. At this time, the extraction unit 15b identifies a calculation amount of the analysis model AM that is indicated by the read profile information, extracts an achievable output frequency by referring to the resource information that indicates a calculation resource or the like of the execution environment that is requested by the operator O, and generates candidate information that includes the identification information on the extracted analysis model AM when the achievable output frequency is larger than the output frequency that is requested by the user.

A specific example of the candidate information generation process will be described below. The extraction unit 15b identifies the calculation amount or the memory of each of the analysis models AM that is indicated by "profile information A", "profile information B", "profile information C", "profile information D", and "profile information E" as the profile information on the analysis models AM that are stored in the analysis model storage unit 14a, refers to "resource information #1" as resource information on an "execution environment #1" that is the execution environment that is requested by the operator O and that is stored in the candidate information storage unit 14b, extracts the "AI logic A", the "AI logic B", and the "AI logic C" as the analysis models AM when the AI logics are executable in the "execution environment #1" and an output frequency that is achievable in total is larger than the output frequency that is requested by the user, generates {AI logic: "AI logic A", "AI logic B", "AI logic C"} as the candidate information that is to be provided to the operator O, and stores the candidate information in the candidate information storage unit 14b.

### Candidate information transmission process

The extraction unit 15b performs the candidate information transmission process. For example, the extraction unit 15b transmits the generated candidate information that includes the identification information on the analysis model AM to the operator terminal 20 of the operator O.

A specific example of the candidate information transmission process will be described below. The extraction unit 15b refers to {AI logic: "AI logic A", "AI logic B", "AI logic C"} as the candidate information that is to be provided to the operator O from the candidate information storage unit 14b, transmits the candidate information to the operator terminal 20 that is used by the operator O, and causes an input-output unit 21 of the operator terminal 20 to display the candidate information as the AI logic selection screen.

### 2-2-5-3. Setting unit 15c

The setting unit 15c performs various kinds of setting. Meanwhile, the setting unit 15c may acquire various kinds of information from the storage unit 14. An AI logic setting instruction process will be described below.

### AI logic setting instruction process

The setting unit 15c performs the AI logic setting instruction process. For example, the setting unit 15c sets the analysis model AM, for which the selection made by the operator O is received by the reception unit 15a, in the execution environment that is requested by the operator O via the AI execution device 30. At this time, the setting unit 15c refers to the selection result, acquires the model data of the analysis model AM corresponding to the selection result, and installs the model data in the requested execution environment via the AI execution device 30.

In this manner, the operator O selects a single candidate to be used from among a plurality of candidates that are presented by the server device 10, and gives, to the server device 10, an instruction to automatically install a single AI logic or all of AI logics included in a combination of the AI logics, which is indicated by the candidate.

A specific example of the AI logic setting instruction process will be described below. The setting unit 15c causes the AI execution device 30 to refer to {AI logic: "AI logic A", "AI logic B"} as the selection result of a selection result storage unit 32b of the AI execution device 30, acquire the "analysis model A" and the "analysis model B" as the model data from the analysis model storage unit 14a, and perform setting such that the "analysis model A" and the "analysis model B" are executable.

At this time, when the operator O designates the AI execution device 30 as a destination of automatic installation, the setting unit 15c performs setting such that the "analysis model A" and the "analysis model B" are executable on a resource that is included in the AI execution device 30. Meanwhile, the setting unit 15c assumes that the AI execution device 30 that is a target for automatic installation has the same specification as the execution environment that is used to generate the candidate information, but the specification, that is, a spec, of the AI execution device 30 that is a target for automatic installation is not specifically limited.

### 2-3. Configuration example and process example of operator terminal 20

A configuration example and a process example of the operator terminal 20 will be described below with reference to FIG. 5. The operator terminal 20 is a posting device and a browsing device, and includes the input-output unit 21, a transmission-reception unit 22, and a communication unit 23.

### 2-3-1. Input-output unit 21

The input-output unit 21 controls input of various kinds of information to the operator terminal 20. For example, the input-output unit 21 is implemented by a mouse, a keyboard, a touch panel, or the like, and receives input of various kinds of information to the operator terminal 20. Further, the input-output unit 21 controls display of various kinds of information from the operator terminal 20. For example, the input-output unit 21 is implemented by a display or the like, and displays various kinds of information that are stored in the operator terminal 20. A setting screen display process will be described below.

### Setting screen display process

The input-output unit 21 performs the setting screen display process. For example, the input-output unit 21 presents a list of a plurality of analysis models AM, and displays the AI logic selection screen as a setting screen for receiving input of a selection of the analysis model AM.

A specific example of the setting screen display process will be described below. The input-output unit 21 displays {AI logic: "AI logic A", "AI logic B", "AI logic C"} that corresponds to a "transmission request #1", as the candidate information that is transmitted from the server device 10.

### 2-3-2. Transmission-reception unit 22

The transmission-reception unit 22 transmits various kinds of information. For example, the transmission-reception unit 22 transmits a candidate information transmission request that is input by the operator O or the resource information to the server device 10. Furthermore, the transmission-reception unit 22 transmits the selection result that is input by the operator O via the AI logic selection screen to the server device 10.

The transmission-reception unit 22 receives various kinds of information. For example, the transmission-reception unit 22 receives the candidate information that is transmitted from the server device 10.

### 2-3-3. Communication unit 23

The communication unit 23 controls data communication with a different apparatus. For example, the communication unit 23 performs data communication with each of communications apparatuses via a router or the like. Further, the communication unit 23 the communication unit 13 is able to perform data communication with a terminal (not illustrated).

### 2-3-4. Specific example of display screen of operator terminal 20

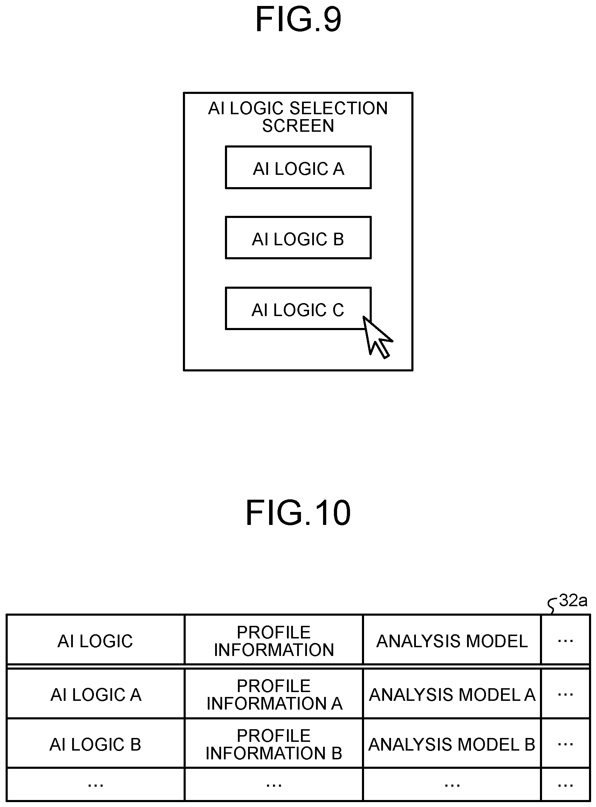

A specific example of a display screen that is output by the input-output unit 21 of the operator terminal 20 will be described below with reference to FIG. 9. FIG. 9 is a diagram illustrating a specific example of the display screen of the operator terminal 20 according to one embodiment. The "AI logic selection screen" will be described below.

### 2-3-4-1. AI logic selection screen

As illustrated in the example in FIG. 9, the operator terminal 20 displays the "AI logic selection screen" that is a setting screen for receiving input of a selection of an AI logic (that is, the analysis model AM). Here, the operator O is able to input a selection of an AI logic that is to be set in the execution environment by performing click operation on one of buttons for the "AI logic A", the "AI logic B", and the "AI logic C" that are displayed.

### 2-3-4-2. Others

The operator O is able to input a selection of a plurality of AI logics that are to be set in the execution environment by performing click operation on two or more of buttons for the "AI logic A", the "AI logic B", and the "AI logic C" that are displayed. At this time, the operator O is also able to input a selection of connecting and setting the plurality of AI logics in series or a selection of connecting and setting the plurality of AI logics in parallel.

### 2-4. Configuration example and process example of AI execution device 30

A configuration example and a process example of the AI execution device 30 will be described below with reference to FIG. 5. The AI execution device 30 includes a communication unit 31, a storage unit 32, and a control unit 33.

### 2-4-1. Communication unit 31

The communication unit 31 controls data communication with a different apparatus. For example, the communication unit 31 performs data communication with each of communications apparatuses via a router or the like. Further, the communication unit 31 is able to perform data communication with a terminal (not illustrated).

### 2-4-2. Storage unit 32

The storage unit 32 stores therein various kinds of information that are referred to when the control unit 33 operates, or various kinds of information that are acquired when the control unit 33 operates. The storage unit 32 stores therein a plurality of machine learning models and profile information that indicates an execution condition of each of the machine learning models, and includes an analysis model storage unit 32a, the selection result storage unit 32b, and a monitoring data storage unit 32c. Here, the storage unit 32 may be implemented by, for example, a semiconductor memory device, such as a RAM or a flash memory, or a storage device, such as a hard disk or an optical disk. Meanwhile, in the example illustrated in FIG. 5, the storage unit 32 is arranged inside the AI execution device 30, but may be arranged outside the AI execution device 30, or it may be possible to arrange a plurality of storage units.

### 2-4-2-1. Analysis model storage unit 32a

The analysis model storage unit 32a stores therein the analysis model AM. For example, the analysis model storage unit 32a stores therein the analysis model AM that is a machine learning model that is received by a transmission-reception unit 33a of the control unit 33 (to be described later) and that is set or executed by an execution unit 33b. Here, an example of data that is stored in the analysis model storage unit 32a will be described with reference to FIG. 10. FIG. 10 is a diagram illustrating an example of the analysis model storage unit 32a of the AI execution device 30 according to one embodiment. In the example illustrated in FIG. 10, the analysis model storage unit 32a includes items such as an "AI logic", "profile information", and an "analysis model".

The "AI logic" indicates identification information for identifying an AI logic that is settable or executable by the AI execution device 30, and is, for example, an identification number or an identification symbol of the AI logic. The "profile information" indicates an execution condition for the AI logic, and is, for example, text information that defines a detection target, an input signal, a calculation amount, a memory, an execution file, an output signal, or the like with respect to the AI logic. The "analysis model" is model data of a machine learning model, and is, for example, data that includes execution data for executing an algorithm of the analysis model AM for image analysis of detecting an event from image data or sensor analysis of detecting an event from measurement data, a model parameter that is a setting value, a hyper-parameter, or the like.

FIG. 10 illustrates an example in which, the analysis model storage unit 32a stores therein a plurality of trained machine learning models, such as {profile information: "profile information A", analysis model: "analysis model A"} for an AI logic that is identified by the "AI logic A" and {profile information: "profile information C", analysis model: "analysis model C"} for an AI logic that is identified by the "AI logic C".

### 2-4-2-2. Selection result storage unit 32b

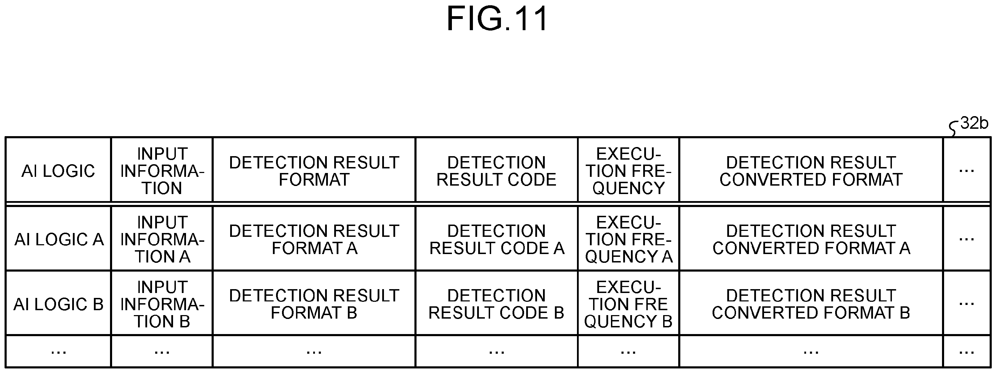

The selection result storage unit 32b stores therein a selection result for installation in the execution environment. For example, the selection result storage unit 32b stores therein a selection result that is input by the operator O via the setting screen and that includes the identification information on the AI logic that is received by the transmission-reception unit 33a of the control unit 33 (to be described later). An example of data that is stored in the selection result storage unit 32b will be described below with reference to FIG. 11. FIG. 11 is a diagram illustrating an example of the selection result storage unit 32b of the AI execution device 30 according to one embodiment. In the example illustrated in FIG. 11, the selection result storage unit 32b includes items such as an "AI logic", "input information", a "detection result format", a "detection result code", an "execution frequency", and a "detection result converted format".

The "AI logic" indicates identification information for identifying a selected AI logic, and is, for example, an identification number or an identification symbol of the AI logic that is selected by the operator O. The "input information" is information on an input signal that is input to the selected AI logic, and is, for example, a format or the like of an input signal that needs to be input to the selected AI logic by the operator O. The "detection result format" is information on a format of an output target that is output from the selected AI logic, and is, for example, a format or the like of an output signal of a detection target that is to be detected by the operator O by using the selected AI logic. The "detection result code" is information on a code of an output target that is output from the selected AI logic, and is, for example, a code ore the like of an output signal of a detection target that is to be detected by the operator O by using the selected AI logic. The "execution frequency" is a frequency of execution of the selected AI logic, and is, for example, the number of times of output that is performed by execution of the selected AI logic by the operator O, per unit time that is designated by the operator O. The "detection result converted format" is information on a format of a converted output target that is output from the selected AI logic, and is, for example, a format or the like of an output signal that enables a user, who uses a converted format when the AI logic that is selected by the operator O outputs a detection result that can be used in a subsequent process, to use the detection result of the AI logic in the subsequent process.

### 2-4-2-3. Monitoring data storage unit 32c

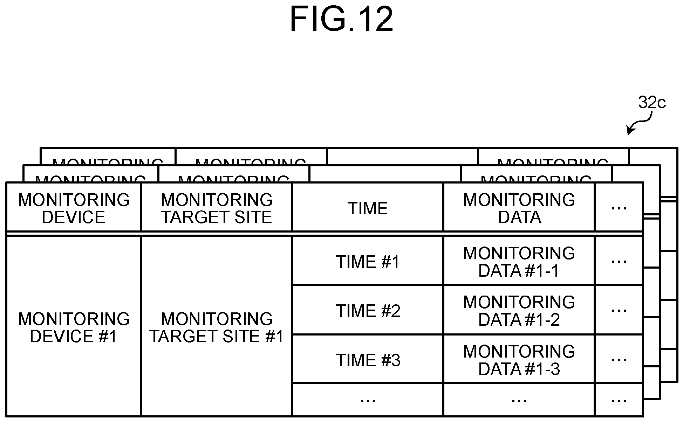

The monitoring data storage unit 32c stores therein monitoring data. For example, the monitoring data storage unit 32c stores therein monitoring data that is received by the transmission-reception unit 33a of the control unit 33 (to be described later). An example of data that is stored in the monitoring data storage unit 32c will be described below with reference to FIG. 12. FIG. 12 is a diagram illustrating an example of the monitoring data storage unit 32c of the AI execution device 30 according to one embodiment. In the example illustrated in FIG. 12, the monitoring data storage unit 32c includes items such as a "monitoring device", a "monitoring target site", a "time", and "monitoring data".

The "monitoring device" indicates identification information for identifying an image capturing apparatus or a measurement apparatus, and is, for example, an identification number or an identification symbol of the camera 40A or the sensor 40B. The "monitoring target site" indicates identification information for identifying an institution, a facility, or a section in which the image capturing apparatus or the measurement apparatus is installed in a monitoring target area, and is, for example, an identification number or an identification symbol of the institution, the facility, or the section. The "time" indicates an image capturing time or a measurement time and is represented by, for example, year-month-day, or hours-minutes-seconds. The "monitoring data" indicates monitoring data that is acquired at the image capturing time or the measurement time, and is, for example, image data of a still image, image data of a moving image, image data of a moving image including voice data, measurement data of temperature, measurement data of humidity, measurement data of noise, measurement data of an intrusion detection signal, measurement data of a human signal, measurement data of a gas detection signal, or the like, which is acquired every second.

Specifically, FIG. 12 illustrates an example in which the monitoring data storage unit 32c stores therein data, such as {time: "time #1", monitoring data: "monitoring data #1-1"}, {time: "time #2", monitoring data: "monitoring data #1-2"}, or {time: "time #3", monitoring data: "monitoring data #1-3"}, with respect to the monitoring device 40 that is identified by the "monitoring device #1" and the monitoring target site that is identified by the "monitoring target site #1".

### 2-4-3. Control unit 33

The control unit 33 controls the entire server device 10. The control unit 33 includes the transmission-reception unit 33a and the execution unit 33b. Here, the control unit 1 may be implemented by, for example, an electronic circuit, such as a CPU or an MPU, or an integrated circuit, such as an ASIC or an FPGA.

### 2-4-3-1. Transmission-reception unit 33a

The transmission-reception unit 33a receives various kinds of information. For example, the transmission-reception unit 33a receives a selection result that is transmitted from the server device 10. Further, the transmission-reception unit 33a is able to receive a selection result that is transmitted from the operator terminal 20.

The transmission-reception unit 33a receives the model data of the analysis model AM that is transmitted from the server device 10. Further, it is possible to receive the model data of the analysis model AM from a predetermined database.

The transmission-reception unit 33a collects monitoring data. A monitoring data collection process (an image data collection process and measurement data collection process) will be described below.

### Monitoring data collection process

The transmission-reception unit 33a performs the monitoring data collection process. For example, the transmission-reception unit 33a collects monitoring data that is acquired by the monitoring device 40 that is installed at the monitoring target site. The monitoring device 40 includes an acquisition unit 41 and a communication unit 42.

As a specific example, the transmission-reception unit 33a collects monitoring data, such as {time: "time #1", monitoring data: "monitoring data #1-1"}, {time: "time #2", monitoring data: "monitoring data #1-2"}, or {time: "time #3", monitoring data: "monitoring data #1-3"}, as monitoring data that is acquired by a monitoring device 40-1 that is installed in a "monitoring target site #1", and stores the monitoring data in the monitoring data storage unit 32c.

### Image data collection process

The transmission-reception unit 33a performs the image data collection process as the monitoring data collection process. For example, the transmission-reception unit 33a collects, as the monitoring data, image data that is acquired by an image capturing device that is installed at the monitoring target site. At this time, the transmission-reception unit 33a collects, for example, image data of a still image, image data of a moving image, image data of a moving image including voice data, or the like, which is captured every second by the camera 40A.

### Measurement data collection process

The transmission-reception unit 33a performs the measurement data collection process as the monitoring data collection process. For example, the transmission-reception unit 33a collects, as the monitoring data, measurement data that is acquired by a measurement device that is installed at the monitoring target site. At this time, the transmission-reception unit 33a collects, for example, measurement data of temperature, measurement data of humidity, measurement data of noise, measurement data of an intrusion detection signal, measurement data of a human signal, measurement data of a gas detection signal, or the like, which is acquired every second by the sensor 40B.

### 2-4-3-2. Execution unit 33b

The execution unit 33b executes various kinds of processes. Meanwhile, the execution unit 33b may acquire various kinds of information from the storage unit 32. An AI logic setting process, an input-output signal adjustment process, and an event detection process will be described below.

### AI logic setting process

The execution unit 33b performs the AI logic setting process. For example, the execution unit 33b sets the analysis model AM that is received by the transmission-reception unit 33a in an execution environment that is requested by the operator O. At this time, the execution unit 33b refers to the selection result, receives model data of the analysis model AM that corresponds to the selection result, and installs the model data in the requested execution environment.

A specific example of the AI logic setting process will be described below. The execution unit 33b refers to {AI logic: "AI logic A", "AI logic B"} as the selection result of the selection result storage unit 32b, refers to the "analysis model A" and the "analysis model B" as the model data from the analysis model storage unit 32a, and performs setting such that the "analysis model A" and the "analysis model B" are executable on the resource of the AI execution device 30.

### Input-output signal adjustment process

The execution unit 33b performs the input-output signal adjustment process. In the following, a first specific example illustrating the input-output signal adjustment process on a single AI logic, a second specific example illustrating the input-output signal adjustment process on a plurality of serial AI logics, and a third specific example illustrating the input-output signal adjustment process on a plurality of parallel AI logics will be described.

### First specific example: single AI logic

As the first specific example, the execution unit 33b performs setting such that an input signal that is acquired in the execution environment is converted to a certain format that is inputtable to the selected analysis model AM based on the profile information, and such that an output signal of the selected analysis model AM is converted to a certain format that is requested by the operator O.

For example, when the "AI logic A" is set in the "execution environment #1", the execution unit 33b refers to the definition of the input signal that is indicated by the "profile information A" on the "AI logic A", performs adjustment such that the monitoring data that is collected from the monitoring device 40 is converted to an input classification, data granularity, and a capturing frequency that is inputtable to the "AI logic A", refers to the definition of the output signal that is indicated by the "profile information A" on the "AI logic A", and performs adjustment such that the output signal that is output from the "AI logic A" is converted to an output value that is designated by the operator O and a meaning that corresponds to the output value.

### Second specific example: serial AI logics

As the second specific example, the execution unit 33b performs setting such that the output signal of the selected analysis model AM is converted to an input signal in a certain format that is inputtable to the selected different analysis model AM based on the profile information.

For example, when serially setting the "AI logic A" and the "AI logic B" in this order in the AI execution device 30, the execution unit 33b refers to the definition of the input signal that is indicated by the "profile information A" on the "AI logic A", performs adjustment such that the monitoring data that is collected from the monitoring device 40 is converted to an input classification , data granularity, and a capturing frequency that is inputtable to the "AI logic A", refers to the definition of the output signal that is indicated by the "profile information A" on the "AI logic A" and the definition of the input signal that is indicated by the "profile information B" on the "AI logic B", performs adjustment such that the output signal that is output from the "AI logic A" is converted to an input classification , data granularity, and a capturing frequency that is inputtable to the "AI logic B", refers to the definition of the output signal that is indicated by the "profile information B" on the "AI logic B", and converts the output signal that is output from the "AI logic B" to an output value that is designated by the operator O and a meaning that corresponds to the output value.

### Third specific example: parallel AI logics

As the third specific example, the execution unit 33b performs setting such that the input signal that is acquired in the execution environment is converted to a certain format that is inputtable to both of the selected analysis model AM and the selected different analysis model AM based on the profile information.

For example, when setting the "AI logic A" and the "AI logic B" in parallel in the AI execution device 30, the execution unit 33b refers to the definition of the input signal that is indicated by the "profile information A" on the "AI logic A" and the definition of the input signal that is indicated by the "profile information B" on the "AI logic B", performs adjustment such that the monitoring data that is collected from the monitoring device 40 is converted to an input classification, granularity, and a capturing frequency that is inputtable to both of the "AI logic A" and the "AI logic B", refers to the definition of the output signal that is indicated by the "profile information A" on the "AI logic A" and the definition of the output signal that is indicated by the "profile information B" on the "AI logic B", and performs adjustment such that both of the output signals that are output from the "AI logic A" and the "AI logic B" are converted to output values that are designated by the operator O and meanings that correspond to the output values.

### Event detection process

The execution unit 33b performs the event detection process. For example, the execution unit 33b detects an event that has occurred in each of monitoring target sites, based on the collected monitoring data.

A specific example will be described. The execution unit 33b analyzes, as the monitoring data that is collected from the monitoring device 40-1 that is installed in a monitoring target site 1, monitoring data of {monitoring device: "monitoring device #1", monitoring target site: "monitoring target site #1", time: "time #1", monitoring data: "monitoring data #1-1"}, detects an event that has occurred in the monitoring target site 1, and outputs {monitoring device: "monitoring device #1", monitoring target site: "monitoring target site #1", time: "time #1", event: "event #1-1"} as a detection result. Further, the execution unit 33b analyzes, as the monitoring data that is collected from a monitoring device 40-2 that is installed in a monitoring target site 2, monitoring data of {monitoring device: "monitoring device #2", monitoring target site: "monitoring target site #2", time: "time #3", monitoring data: "monitoring data #2-3 "}, detects an event that has occurred in the monitoring target site 2, and outputs {monitoring device: "monitoring device #2", monitoring target site: "monitoring target site #2", time: "time #3", event: "event #2-3 "} as a detection result.

At this time, the execution unit 33b may acquire a detection result that is output by inputting {monitoring device: "monitoring device #1", monitoring target site: "monitoring target site #1", time: "time #1", monitoring data: "monitoring data #1-1"} as the monitoring data that is collected from the monitoring device 40-1 that is installed at the monitoring target site 1 to the "analysis model A" as the analysis model AM that is stored in the analysis model storage unit 32a. Furthermore, the execution unit 33b may acquire a detection result that is output by inputting {monitoring device: "monitoring device #2", monitoring target site: "monitoring target site #2", time: "time #3", monitoring data: "monitoring data #2-3"} as the monitoring data that is collected from the monitoring device 40-2 that is installed at the monitoring target site 2 to the "analysis model B" as the analysis model AM that is stored in the analysis model storage unit 32a.

### Image data analysis process

The execution unit 33b performs an image data analysis process as the event detection process. For example, the execution unit 33b detects an event based on the collected image data. At this time, the execution unit 33b analyzes, for example, image data of a still image that is acquired every second by the camera 40A, and detects, as the event, animal intrusion, an animal behavior, or the like based on a difference in the image data. Further, the execution unit 33b is able to detect an event that has occurred by using, for example, the analysis model AM that outputs an event upon input of the image data of the still image that is acquired every second by the camera 40A.

### Measurement data analysis process

The execution unit 33b performs a measurement data analysis process as the event detection process. For example, the execution unit 33b detects an event based on the collected measurement data. At this time, the execution unit 33b analyzes, for example, measurement data, such as temperature, humidity, noise, an intrusion detection signal, a human signal, or a gas detection signal, that is acquired every second by the sensor 40B, and detects, as the event, an abnormal state or the like of the monitoring target site based on a default value of each piece of the measurement data. Further, the execution unit 33b is able to detect an event that has occurred by using, for example, the analysis model AM that outputs an event upon input of the measurement data, such as temperature, humidity, noise, an intrusion detection signal, a human signal, or a gas detection signal, that is acquired every second by the sensor 40B.

### 3. Flow of each of processes performed by monitoring system 100

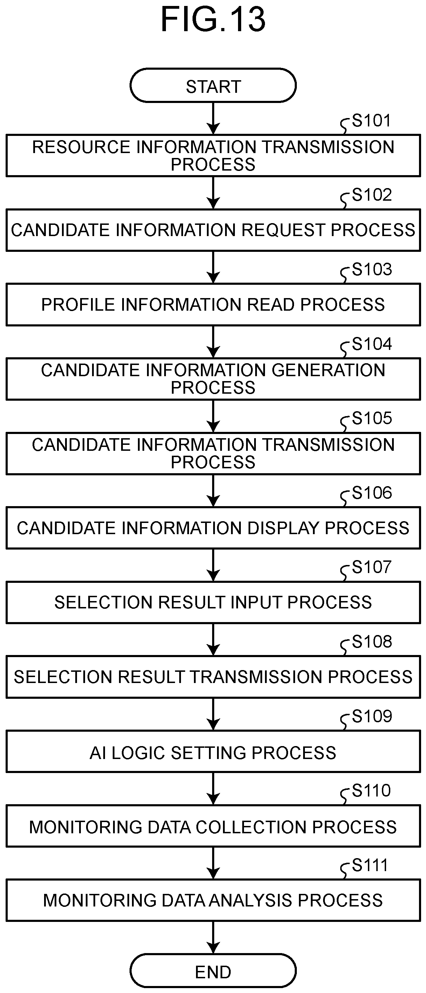

The flow of a process performed by the monitoring system 100 according to one embodiment will be described below with reference to FIG. 13. FIG. 13 is a flowchart illustrating an example of the entire flow of the monitoring system 100 according to one embodiment. Meanwhile, processes from Step S101 to Step S111 below may be performed in different order. Further, any of the processes from Step S101 to Step S111 below may be omitted.

### 3-1. Resource information transmission process

Firstly, the operator terminal 20 performs a resource information transmission process (Step S101). For example, the operator terminal 20 transmits the resource information on the execution environment, which is input by the operator O, to the server device 10.

### 3-2. Candidate information request process

Secondly, the operator terminal 20 performs a candidate information request process (Step S102). For example, the operator terminal 20 transmits a candidate information transmission request that is input by the operator O to the server device 10 together with a designated execution environment, an analysis category, or the like.

### 3-3. Profile information read process

Thirdly, the server device 10 performs a profile information read process (Step S103). For example, the server device 10 reads the profile information (for example, an output target, an input signal, a calculation amount, a memory, an execution file, or an output signal of the AI logic), that is assigned to the model data of the stored AI logic.

### 3-4. Candidate information generation process

Fourthly, the server device 10 performs a candidate information generation process (Step S104). For example, the server device 10 extracts an AI logic that is executable in the execution environment that is requested by the operator O based on the profile information and the resource information, and generates candidate information that includes the identification information on the extracted AI logic.

### 3-5. Candidate information transmission process

Fifthly, the server device 10 performs the candidate information transmission process (Step S105). For example, the server device 10 transmits, to the operator terminal 20, the candidate information that includes identification information on an AI logic that is executable in the execution environment.

### 3-6. Candidate information display process

Sixthly, the operator terminal 20 performs the candidate information display process (Step S106). For example, the operator terminal 20 displays, as the candidate information, an AI logic selection screen that presents a list of pieces of identification information on AI logics on a monitor.

### 3-7. Selection result input process

Seventhly, the operator O performs the selection result input process (Step S107). For example, the operator O selects an AI logic from the list of the pieces of identification information on the AI logics, and inputs, as the selection result, a selection of the AI logic that is to be used for analysis.

### 3-8. Selection result transmission process

Eighthly, the operator terminal 20 performs the selection result transmission process (Step S108). For example, the operator terminal 20 transmits, to the server device 10, the selection result that includes the identification information on the AI logic that is input to the operator terminal 20 by the operator O. Further, the server device 10 transmits, to the AI execution device 30, the received selection result, the model data of the AI logic, the profile information on the AI logic, the output information, and the output frequency.

### 3-9. AI logic setting process

Ninthly, the AI execution device 30 performs the AI logic setting process (Step S109). For example, when the operator O designates the AI execution device 30 as the execution environment, the AI execution device 30 installs an application of the AI logic on a resource that is included in the AI execution device 30. Further, the AI execution device 30 may refer to the profile information on the AI logic for which the application is to be installed, and adjust an input signal or an output signal.

### 3-10. Monitoring data collection process

Tenthly, the AI execution device 30 performs the monitoring data collection process (Step S110). For example, the AI execution device 30 collects the monitoring data that is acquired by the monitoring device 40 that is installed at the monitoring target site.

### 3-11. Monitoring data analysis process

Eleventhly, the AI execution device 30 performs the monitoring data analysis process (Step S111). For example, the AI execution device 30 analyzes the monitoring data by using the AI logic that is set in the execution environment, and detects an event that has occurred at the monitoring target site.

### 4. Effects of one embodiment

Lastly, effects of one embodiment will be described. A first effect to a ninth effect corresponding to the processes according to one embodiment will be described below.

### 4-1. First effect

Firstly, in the process according to one embodiment as described above, the server device 10 stores therein the plurality of analysis models AM and the profile information that indicates an execution condition of each of the analysis models AM, and upon receiving a request from the operator O, extracts the analysis models AM that are executable in the execution environment that is requested by the operator O from among the plurality of analysis models AM based on the profile information. Therefore, in this process, by assigning the profile information to the AI logic, it is possible to easily select a machine learning program that is needed by a user.

### 4-2. Second effect

Secondly, in the process according to one embodiment as described above, the server device 10 receives a selection that is made by the operator O from among the extracted analysis models AM, and sets the analysis model AM for which the selection is received in the execution environment that is requested by the operator O. Therefore, in this process, by automatically installing an application of an AI logic in the execution environment that is requested by the operator O and by assigning the profile information to the AI logic, it is possible to easily select a machine learning program that is needed by a user and it is possible to easily set the machine learning program.

### 4-3. Third effect

Thirdly, in the process according to one embodiment as described above, the AI execution device 30 converts an input signal that is acquired in the execution environment to a certain format that is inputtable to the selected analysis model AM based on the profile information, and converts an output signal of the selected analysis model AM to a certain format that is requested by the operator O. Therefore, in this process, by automatically adjusting an input-output signal when an application of an AI logic is installed in the execution environment that is requested by the operator O and by assigning the profile information to the AI logic, it is possible to easily select and set the machine learning program that is needed by the user.

### 4-4. Fourth effect

Fourthly, in the process according to one embodiment as described above, the AI execution device 30 performs setting such that an output signal of the selected analysis model AM is converted to an input signal of a certain format that is inputtable to a selected different analysis model AM based on the profile information. Therefore, in this process, by automatically adjusting an input-output signal when applications of a plurality of AI logics are connected in series and installed in the execution environment that is requested by the operator O and by assigning the profile information to the AI logic, it is possible to easily select a machine learning program that is needed by a user and it is possible to easily set the machine learning program.

### 4-5. Fifth effect

Fifthly, in the process according to one embodiment as described above, the AI execution device 30 performs setting such that an input signal that is acquired in the execution environment to a certain format that is inputtable to both of the selected analysis model AM and the selected different analysis model AM based on the profile information. Therefore, in this process, by automatically adjusting an input-output signal when applications of a plurality of AI logics are connected in parallel and installed in the execution environment that is requested by the operator O and by assigning the profile information to the AI logic, it is possible to easily select a machine learning program that is needed by a user and it is possible to easily set the machine learning program.

### 4-6. Sixth effect

Sixthly, in the process according to one embodiment as described above, the profile information includes at least one of information that defines an output target, an input signal, a calculation amount, a memory, an execution file, and an output signal. Therefore, in this process, by assigning information that is a common format to the AI logic and by assigning the profile information to the AI logic, it is possible to easily select a machine learning program that is needed by a user and it is possible to easily set the machine learning program.

### 4-7. Seventh effect

Seventhly, in the process according to one embodiment as described above, the AI execution device 30 inputs monitoring data that is collected from the monitoring device 40 that is installed at the monitoring target site to the machine learning model for which the selection is received, and detects an output analysis target as an event. Therefore, in this process, by assigning the profile information to the AI logic, it is possible to easily select and set a machine learning program that is needed by the user and it is possible to effectively detect an event that has occurred.

### 4-8. Eighth effect

Eighthly, in the process according to one embodiment as described above, the monitoring data image data that is acquired by the camera 40A that is installed at the monitoring target site. Therefore, in this process, by assigning the profile information to the AI logic, it is possible to easily select and set the machine learning program that is needed by the user and it is possible to effectively detect, based on the image analysis, an event that has occurred.

### 4-9. Ninth effect

Ninthly, in the process according to one embodiment as described above, the monitoring data is measurement data that is acquired by the sensor 40B that is installed at the monitoring target site. Therefore, in this process, by assigning the profile information to the AI logic, it is possible to easily select and set the machine learning program that is needed by the user and it is possible to effectively detect an event that has occurred based on sensor analysis.

### 5. System

The processing procedures, control procedures, specific names, and information including various kinds of data and parameters illustrated in the above-described document and drawings may be arbitrarily changed unless otherwise specified.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Moreover, all or an arbitrary part of processing functions that are implemented by the apparatuses may be realized by a CPU and a program analyzed and executed by the CPU, or may be realized by hardware using wired logic.

### 6. Hardware

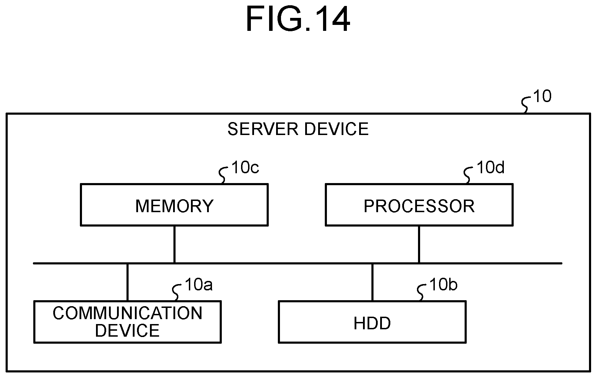

A hardware configuration example of the server device 10 that is an information processing apparatus will be described below. Meanwhile, the other apparatuses may have the same hardware configurations. FIG. 14 is a diagram illustrating a hardware configuration example according to one embodiment. As illustrated in FIG. 14, the server device 10 includes a communication device 10a, a Hard Disk Drive (HDD) 10b, a memory 10c, and a processor 10d. Further, the units illustrated in FIG. 14 are connected to one another via a bus or the like.

The communication device 10a is a network interface card or the like and performs communication with a different server. The HDD 10b stores therein a program, a database (DB), or the like for operating the functions as illustrated in FIG. 5.

The processor 10d reads a program that executes the same processes as those of each of the processing units illustrated in FIG. 5 from the HDD 10b, loads the program onto the memory 10c, operates the processes for implementing each of the functions as described above with reference to FIG. 5. For example, the process implements the same functions as those of the processing units included in the server device 10. Specifically, the processor 10d reads, from the HDD 10b or the like, programs that have the same functions as those of the reception unit 15a, the extraction unit 15b, the setting unit 15c, and the like. Further, the processor 10d performs processes that implement the same processes as those of the reception unit 15a, the extraction unit 15b, the setting unit 15c, and the like.

In this manner, the server device 10 operates an apparatus that reads and executes a program to implement various kinds of processing methods. Further, the server device 10 may be able to implement the same functions as those of the embodiments as described above by causing a medium reading apparatus to read the above-described program from a recording medium and executing the read program. Meanwhile, the program described in this embodiment need not always be executed by the server device 10. For example, the present invention may be applied in the same manner to a case in which a different computer or a server executes the program and a case in which the different computer and the server execute the program in a cooperative manner.

The program as described above may be distributed via a network, such as the Internet. Further, the program as described above may be recorded in a computer readable recording medium, such as a hard disk, a flexible disk (FD), a compact disk read only memory (CD-ROM), a Magneto-Optical disk (MO), or a Digital Versatile Disc (DVD), and executed by being read from the recording medium by a computer.

According to the present invention, by assigning profile information to an AI logic, it is possible to easily select a machine learning program that is needed by a user.

## Claims

1. An information processing apparatus (10) comprising:
a storage unit (14) that stores therein a plurality of machine learning models and profile information that indicates an execution condition of each of the machine learning models; and
an extraction unit (15b) that, when receiving a request from a user, extracts machine learning models that are executable in an execution environment that is requested by the user from among the plurality of machine learning models based on the profile information.

2. The information processing apparatus (10) according to claim 1, further comprising:
a reception unit (15a) that receives a selection that is made by the user from among the extracted machine learning models; and
a setting unit (15c) that sets the machine learning model or which the selection is received in the execution environment that is requested by the user.

3. The information processing apparatus (10) according to claim 2, wherein the setting unit (15c) converts an input signal that is acquired in the execution environment to a certain format that is inputtable to the selected machine learning model based on the profile information, and converts an output signal of the selected machine learning model to a certain format that is requested by the user.

4. The information processing apparatus (10) according to claim 2 or 3, wherein the setting unit (15c) performs setting such that an output signal of the selected machine learning model to an input signal of a certain format that is inputtable to a selected different machine learning model based on the profile information.

5. The information processing apparatus (10) according to any one of claims 2 to 4, wherein the setting unit (15c) performs setting such that an input signal that is acquired in the execution environment to a certain format that is inputtable to both of the selected machine learning model and a selected different machine learning model based on the profile information.

6. The information processing apparatus (10) according to any one of claims 1 to 5, wherein the profile information includes at least one of information that defines an output target, an input signal, a calculation amount, a memory, an execution file, and an output signal.

7. The information processing apparatus (10) according to any one of claims 2 to 6, wherein the setting unit (15c) sets the machine learning model with respect to an execution apparatus that inputs monitoring data that is collected from a monitoring device that is installed at the monitoring target site to the machine learning model for which the selection is received, and detects an output analysis target as an event.

8. The information processing apparatus (10) according to claim 7, wherein the monitoring data is image data that is acquired by an image capturing device that is installed at the monitoring target site.

9. The information processing apparatus (10) according to claim 7 or 8, wherein the monitoring data is measurement data that is acquired by a measurement apparatus that is installed at the monitoring target site.

10. An information processing method that is implemented by a computer (10), the information processing method comprising:
extracting, when receiving a request from a user, machine learning models that are executable in an execution environment that is requested by the user from among the plurality of machine learning models based on profile information that indicates an execution condition of each of the machine learning models, the profile information being stored together with the plurality of machine learning models.

11. An information processing program that causes a computer (10) to execute a process, the process comprising:
extracting, when receiving a request from a user, machine learning models that are executable in an execution environment that is requested by the user from among the plurality of machine learning models based on profile information that indicates an execution condition of each of the machine learning models, the profile information being stored together with the plurality of machine learning models.
